# EUROPÄISCHE PATENTSCHRIFT

(11) **EP 0 766 370 B1**
(45) Veröffentlichungstag und Bekanntmachung des Hinweises auf die Patenterteilung: **15.03.2000**
(21) Anmeldenummer: 96114852.5
(22) Anmeldetag: 17.09.1996
(51) Int. Cl.: H02K 29/08

(54) **Elektronisch kommutierter Aussenläufermotor**
Electronically commutated outer rotor motor
Moteur à rotor extérieur commuté électroniquement

(30) Priorität: 29.09.1995 DE 29515530 U
(43) Veröffentlichungstag der Anmeldung: 02.04.1997
(73) Patentinhaber: PAPST-MOTOREN GmbH & Co. KG, 78106 St Georgen (DE)
(72) Erfinder: Jeske, Frank, Dipl.-Ing., 78144 Tennenbronn (DE)

(56) Entgegenhaltungen:
- EP-A- 0 160 522
- DE-A- 3 028 747
- US-A- 4 891 567
- US-A- 4 899 075
- US-A- 5 148 069

## Beschreibung

Die Erfindung betrifft einen elektronisch kommutierten Außenläufermotor, insbesondere für einen Lüfter.

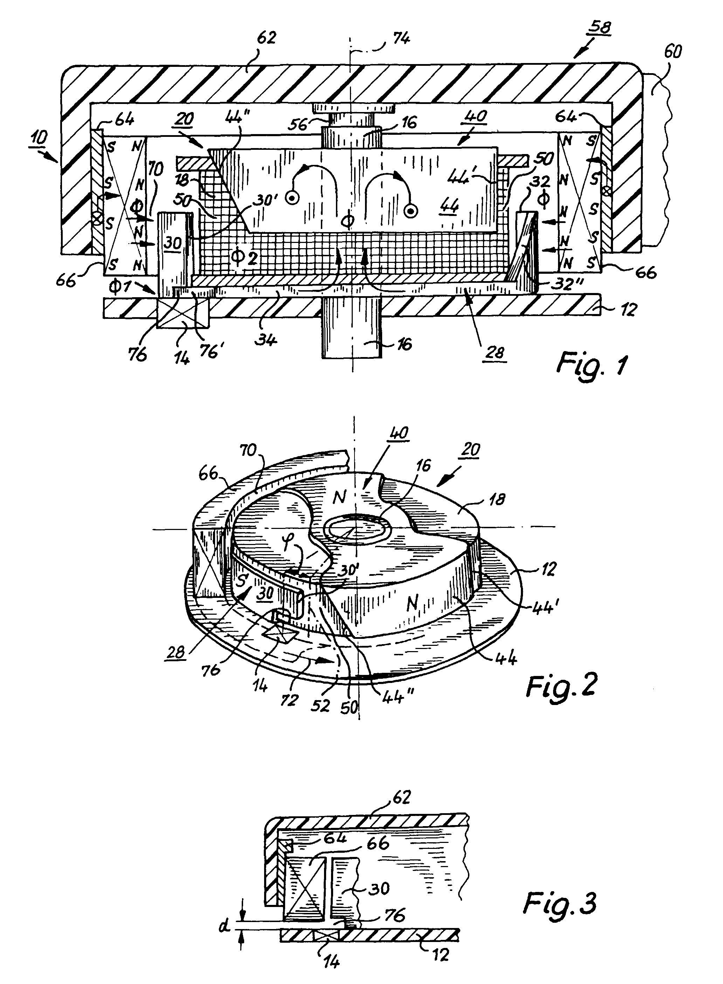

Da solche Motoren häufig, in Form von Kleinstmotoren, zum Antrieb von Lüftern verwendet werden, um innerhalb von Computern oder dergleichen Mikroprozessoren auf Leiterplatten direkt zu kühlen, ist eine äußerst kompakte Bauweise wichtig. Man ordnet deshalb bei der sogenannten Klauenpol-Bauweise die Polbleche auf beiden Seiten einer Statorspule an und läßt die Klauenpole dieser Polbleche interdigital ineinandergreifen, so, wie das beispielhaft nachfolgend in Fig. 2 dargestellt ist. Das ergibt eine sehr kurze, gedrungene axiale Bauweise. (Ein Beispiel: Die Glieder eines Reißverschlußes greifen "interdigital" ineinander.) . Ein Motor in Klauenpol-Bauweise ist bekannt aus der US-A, 4 891 567.

Ferner ordnet man den Hallgenerator, der die Kommutierung des Motors steuert, mit Vorteil so an, daß die Kommutierung etwas zu früh erfolgt, was man im Jargon der Techniker als "Frühzündung" bezeichnet, obwohl es sich naturgemäß nicht um eine Zündung handelt, sondern um das Ein- und Ausschalten der Ströme in den Phasen (Strängen) einer Statorwicklung. Dazu muß der Hallgenerator gegenüber der sogenannten neutralen Feldzone des Stators entgegen der Drehrichtung versetzt werden. Nachteilig ist bei der bisherigen Klauenpol-Bauweise, daß hierdurch das Ausgangssignal des Hallgenerators erheblich verformt wird, und daß ein sicherer Anlauf in der richtigen Drehrichtung nicht in allen Fällen gewährleistet ist.

Aus der DE-A, 30 28 747 ist ein kollektorloser Elektronikmotor bekannt, bei welchem der Rotorlagegeber zwischen den Wickelköpfen des Stators und dem radial magnetisiertem Rotormagneten des Außenrotors angeordnet ist.

Aus der US-A, 5 148 069 ist ein kollektorloser Elektronikmotor mit Innenläufer bekannt, bei welchem der Rotorlagegeber auf der radialen Außenseite des Innenrotors angeordnet ist.

Deshalb ist es eine Aufgabe der Erfindung, einen neuen elektronisch kommutierten Außenläufermotor bereitzustellen, insbesondere einen Kleinstmotor.

Nach der Erfindung wird diese Aufgabe gelöst durch einen elektronisch kommutierten Außenläufermotor, insbesondere für einen Lüfter, mit einem permanentmagnetischen Außenrotor, mit einem Innenstator, welcher weichferromagnetische Elemente nach Art von Klauenpolen aufweist, und mit einem vom Streufeld des permanentmagnetischen Außenrotors gesteuerten, im Bereich des Stators angeordneten galvanomagnetischen Sensor. Dieser Motor ist dadurch gekennzeichnet, daß der galvanomagnetische Sensor entgegen der Drehrichtung relativ zu einer neutralen Feldzone des Stators versetzt und in einer zugeordneten Aussparung eines der weichferromagnetischen Elemente des Stators angeordnet ist, um die Größe des auf den galvanomagnetischen Sensor vom Außenrotor wirkenden Magnetflusses zu erhöhen und damit die Genauigkeit des von diesem Sensor im Betrieb abgegebenen Rotorstellungssignals zu verbessern. Man erreicht so mit einfachsten Maßnahmen, daß der Motor in der richtigen Drehrichtung anläuft, und daß die vom galvanomagnetischen Sensor abgegebenen Signale ausreichend groß sind, um einen Betrieb des Motors mit gutem Wirkungsgrad zu ermöglichen.

Ein bevorzugte Weiterbildung der Erfindung ist Gegenstand des Patentanspruchs 2. Es hat sich gezeigt, daß man hiermit einen sehr zuverlässigen Betrieb des Motors erreichen kann.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den übrigen Unteransprüchen. Es zeigt:
- Fig. 1: eine schematische Darstellung eines erfindungsgemäßen Außenläufermotors, teilweise im Längsschnitt, und in vergrößerter Darstellung,
- Fig. 2: eine raumbildliche Darstellung des Motors der Fig. 1, ebenfalls in stark schematisierter Darstellungsweise,
- Fig. 3: eine statische Darstellung zur Erläuterung der Wirkungsweise,
- Fig. 4: eine Draufsicht auf ein unteres Polblech des Motors der Fig. 1 bis 3 und auf dessen Klauenpole,
- Fig. 5: einen Schnitt, gesehen längs der Linie V-V der Fig. 4,
- Fig. 6: eine Seitenansicht des Polblechs der Fig. 4, gesehen in Richtung des Pfeiles VI der Fig. 4,
- Fig. 7: eine abgewickelte Darstellung eines geschrägten Teils einer Klaue des Polblechs der Fig. 4 bis 6, gesehen in Richtung des Pfeiles VII der Fig. 4,
- Fig. 8: eine Darstellung analog Fig. 6, aber in natürlicher Größe, vgl. die daneben gezeichnete Größe für einen Zentimeter,
- Fig. 9: eine Darstellung analog Fig. 4, aber in natürlicher Größe, vgl. die daneben gezeichnete Größe für einen Zentimeter,
- Fig. 10: eine Draufsicht auf ein oberes Polblech des Motors der Fig. 1 bis 3 und auf dessen Klauenpole,
- Fig. 11: einen Schnitt, gesehen längs der Linie XI-XI der Fig. 10,
- Fig. 12: eine Seitenansicht des Polblechs der Figur 10, gesehen in Richtung des Pfeiles XII der Fig. 10,
- Fig. 13: eine abgewickelte Darstellung eines geschrägten Teils einer Klaue des Polblechs der Fig. 10 bis 12, gesehen in Richtung des Pfeiles XIII der Fig. 10,
- Fig. 14: eine Darstellung analog Fig. 12, aber in natürlicher Größe, vgl. die daneben gezeichnete Größe für einen Zentimeter,
- Fig. 15: eine Darstellung analog Fig. 10, aber in natürlicher Größe, vgl. die daneben gezeichnete Größe für einen Zentimeter,
- Fig. 16: die Darstellung einer Schaltung, wie sie beim Motor nach den vorhergehenden Figuren verwendet werden kann,
- Fig. 17: eine Darstellung des Ausgangssignals eines Hallgenerators bei Drehung des Rotors und für den Fall, daß eine erfindungsgemäße Aussparung im unteren Polblech nicht verwendet wird, und
- Fig. 18: eine Darstellung analog Fig. 17, aber bei Verwendung einer erfindungsgemäßen Aussparung im unteren Polblech; es ergibt sich hier eine zuverlässige Kommutierung zu den gewünschten Zeitpunkten, und ein zuverlässiger Anlauf des Motors in der richtigen Drehrichtung.

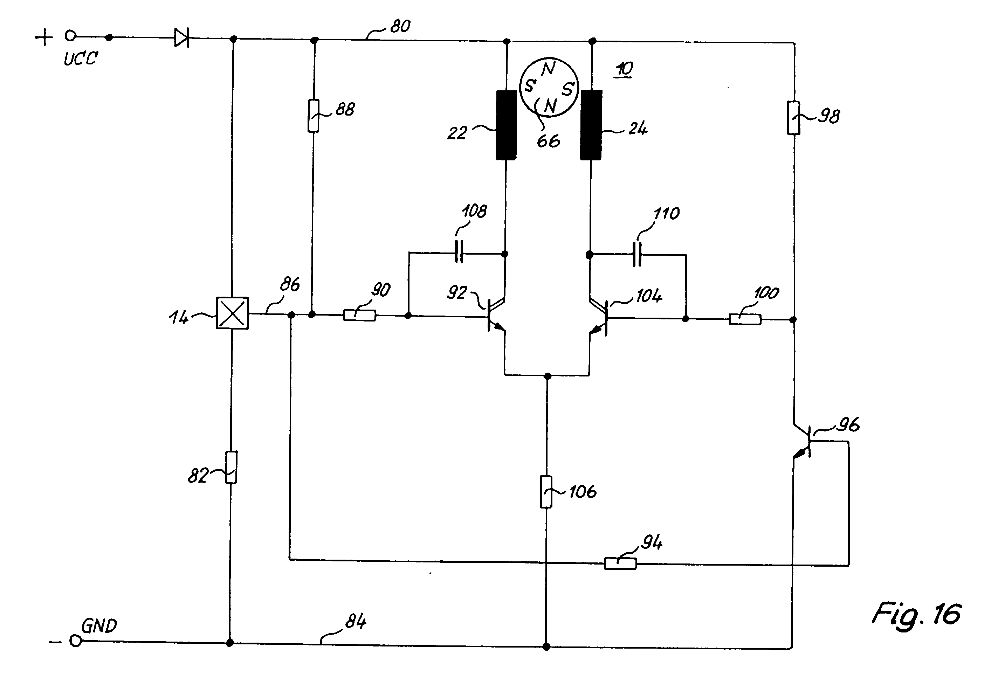

Fig. 1 zeigt eine stark schematisierte Darstellung eines Außenläufermotors 10. Dieser hat eine Leiterplatte 12, auf der gewöhnlich die elektronischen Bauelemente des Motors angebracht sind, wie sie nachfolgend anhand der Fig. 16 beschrieben werden, unter ihnen ein Hallgenerator 14, gewöhnlich in Form eines üblichen Hall-IC. Naturgemäß ist die Verwendung jedes anderen galvanomagnetischen Sensors gleichfalls möglich.

An der Leiterplatte 12 ist ein Lagertragrohr 16 befestigt, und um dieses herum ist die Spulenanordnung 18 eines Stators 20 angeordnet. Diese Spulenanordnung 18 enthält beim Ausführungsbeispiel zwei Wicklungsphasen 22 und 24, vgl. Fig. 16, gewöhnlich in Form einer bifilar gewickelten Wicklung. Die Spulen erstrecken sich also um die Drehachse des Motors 10 herum. Wird folglich die eine Phase 22 erregt, so entsteht am oberen Ende der Spule 18 ein Nordpol und unten ein Südpol, wie in Fig. 2 dargestellt. Wird umgekehrt die andere Phase 24 erregt, so entsteht am oberen Ende der Spulenanordnung 18 ein Südpol, und unten ein Nordpol. Alternativ könnte die Spulenanordnung auch nur einen einzigen Wicklungsstrang haben, der über eine Vollbrückenschaltung mit Strom versorgt wird. Dabei würde dann der Strom durch diesen (einzigen) Wicklungsstrang alternierend in die eine oder in die andere Richtung fließen.

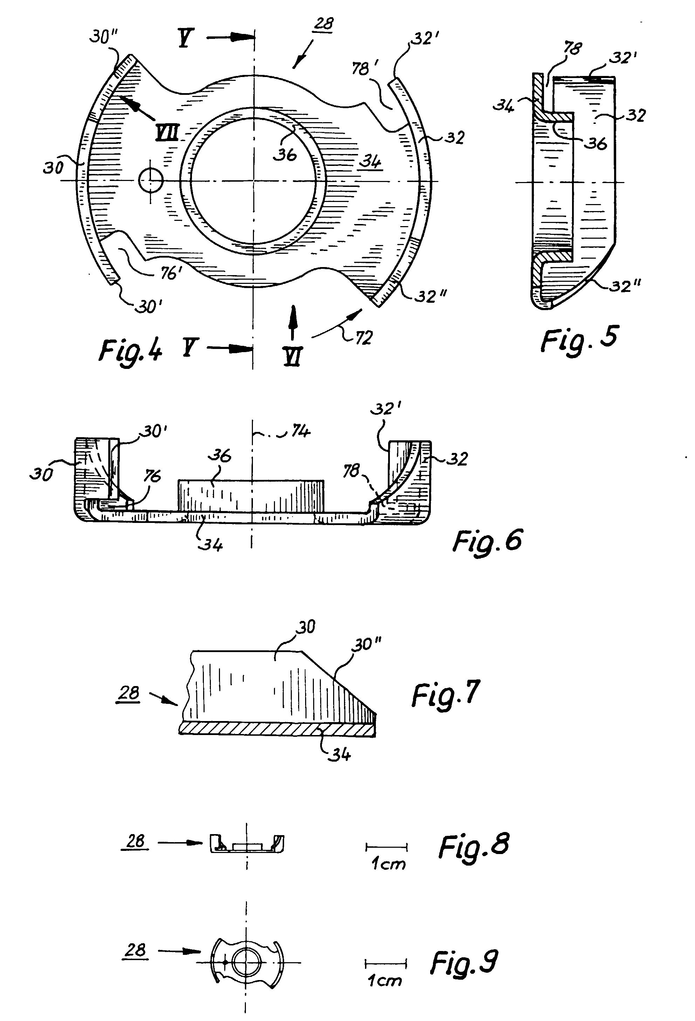

Am unteren Ende der Spulenanordnung 18 ist am Lagertragrohr 16 (aus weichferromagnetischem Material) ein unteres Polblech 28 befestigt, das mit zwei nach oben ragenden Klauen 30, 32 versehen und in den Fig. 4 bis 9 im einzelnen dargestellt ist. Sein unterer, ebener Abschnitt ist mit 34 bezeichnet. Es wird mit einem inneren Kragen 36 auf das Lagertragrohr 16 aufgepreßt.

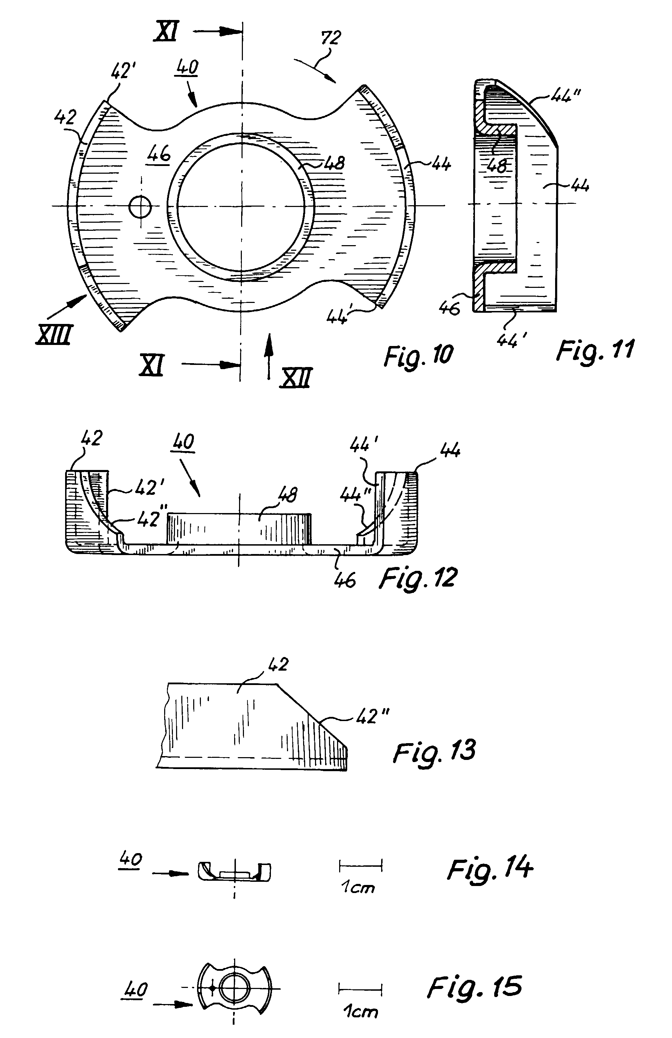

Am oberen Ende der Spulenanordnung 18 ist am Lagertragrohr 16 ein oberes Polblech 40 befestigt, das mit zwei nach unten ragenden Klauen 42, 44 versehen und in den Fig. 10 bis 15 im einzelnen dargestellt ist. Sein oberer, ebener Abschnitt ist mit 46 bezeichnet. Es wird mit einem inneren Kragen 48 auf das Lagertragrohr 16 aufgepreßt.

Wie aus Fig. 2 klar hervorgeht, ragen die vier Klauen 30, 32, 42, 44 interdigital ineinander und bilden vier Statorpole gleichen Abstands, die jeweils durch Pollücken 50 voneinander getrennt sind, von denen eine in Fig. 2 dargestellt ist. Durch diese Pollücken verläuft jeweils eine neutrale Feldzone 52 des Stators, und gemäß Fig. 2 ist der Hallgenerator 14 gegenüber dieser neutralen Feldzone 52 um einen Winkel ϕ von z.B. 15° el. entgegen der Drehrichtung versetzt, um eine nach früh verschobene Kommutierung zu bewirken, wie sie bei diesen Motoren für einen optimalen Betrieb erforderlich ist, also die eingangs erwähnte "Frühzündung".

Im Lagertragrohr 16 ist die Welle 56 eines Außenrotors 58 gelagert, der ein - gewöhnlich mit Lüfterflügeln 60 versehenes - haubenartiges Außenteil 62 aus Kunststoff aufweist, auf dessen Innenseite ein Rückschlußring 64 aus weichferromagnetischem Werkstoff befestigt ist. Innerhalb dieses Ringes 64 ist ein Rotormagnet 66 befestigt, gewöhnlich ein sogenannter Gummimagnet, also eine Mischung aus Gummi/Kunststoff und einem Hartferrit. Dieser Magnetring 66 ist hier vierpolig magnetisiert, hat also vier Magnetpole N-S-N-S (vgl. Fig. 16), und diese sind im wesentlichen rechteckförmig magnetisiert. In der Praxis ergibt sich dadurch, in Umfangsrichtung gemessen, eine im wesentlichen trapezförmige Verteilung der Magnetflußdichte.

Da dieser Magnetring 60 radial magnetisiert ist, wirkt in Richtung zum Hallgenerator 14 nur ein Streufluß des Magnetrings 60, und dieser Streufluß ist in Fig. 1 mit Ø1 bezeichnet.

Dagegen ist der Hauptfluß des Rotormagneten 66 mit Ø bezeichnet. Dieser geht gemäß Fig. 1 z.B. von den Nordpolen des Magnetrings 66 über die Klauen 30, 32 zum unteren Polblech 28, durch das Lagertragrohr 16 zum oberen Polblech 40 und zu dessen Klauen 42, 44, von diesen zu den (nicht dargestellten) Südpolen des Magnetrings 66, und von diesen über den Rückschlußring 64 zurück zu den Nordpolen des Rotormagneten 66. Dies ist in Fig. 1 mit den üblichen Symbolen des Elektromaschinenbaus dargestellt, wobei ein Punkt im Kreis eine Pfeilspitze und ein diagonales Kreuz im Kreis ein Pfeilende symbolisiert.

An sich wäre es günstig, den Hallgenerator 14 z. B. auf der Klaue 30 des unteren Polblechs 28 direkt im Luftspalt 70 des Motors anzuordnen, doch geht das aus mechanischen Gründen nicht, denn dieser Motor ist extrem klein (vgl. die Fig. 8 und 9), sondern man muß den Hallgenerator 14 auf der Leiterplatte 12 anordnen, und dort wirkt auf ihn nur der Streufluß Ø1 vom Rotormagneten 66. Dieser Streufluß wird umso schwächer, je größer der in Fig. 3 schematisch dargestellte Abstand d zwischen dem Rotormagneten 66 und dem Hallgenerator 14 wird, wobei zusätzlich stört, daß das untere Polblech 28 sozusagen diesen Streufluß Ø1 vom Hallgenerator 14 "absaugt" und dadurch das Hallsignal zusätzlich reduziert. Dies wird dadurch verstärkt, daß der Hallgenerator 14, wie beschrieben, um den Winkel ϕ (Fig. 2) entgegen der Drehrichtung versetzt ist, welche in Fig. 2 mit 72 bezeichnet ist.

Die Fig. 5 bis 9 zeigen die erfindungsgemäße Ausgestaltung des unteren Polblechs 28. Seine Klauenpole 30, 32 haben jeweils an ihrem in Drehrichtung 72 vorderen Ende 30' bzw. 32' eine gerade Kante, die also parallel zur Drehachse 74 des Motors 10 verläuft. Diese Kanten 30' bzw. 32' gehen jeweils an ihrem unteren Ende über in eine Aussparung bzw. Lücke 76 bzw. 78, welche sich so weit entgegen der Drehrichtung 72 erstreckt, daß sie beim fertig montierten Motor ein Fenster für den Hallgenerator 14 bildet, wie das aus Fig. 2 besonders klar ersichtlich wird.

Diese Aussparungen 76, 78 setzen sich im ebenen Teil 34 des unteren Polbereichs 28 radial nach innen als Aussparungen 76', 78' fort, die also ebenfalls ein Fenster für den Hallgenerator 14 bilden und deren radiale Erstreckung diesem Erfordernis angepaßt ist.

Naturgemäß wird im Prinzip nur das Fenster 76, 76' benötigt, aber aus Symmetriegründen kann auch das Fenster 78, 78' vorgesehen werden, was zudem bei der Montage als Erleichterung wirkt, da dann nicht auf die korrekte Winkellage des unteren Polblechs 28 geachtet werden muß. Außerdem hat der symmetrische Aufbau der Klauenpole 30, 32 den wesentlichen Vorteil, daß sich der magnetische Fluß im Motor über beide Klauenpole 30, 32 völlig gleichmäßig verteilt, so daß auch die an diesen Polen erzeugten magnetischen Kräfte gleich groß sind und die radiale Kraftwirkung symmetrisch ist. Dies hat die Wirkung, daß die Erzeugung von Körperschall vermieden wird und der Motor ruhiger läuft.

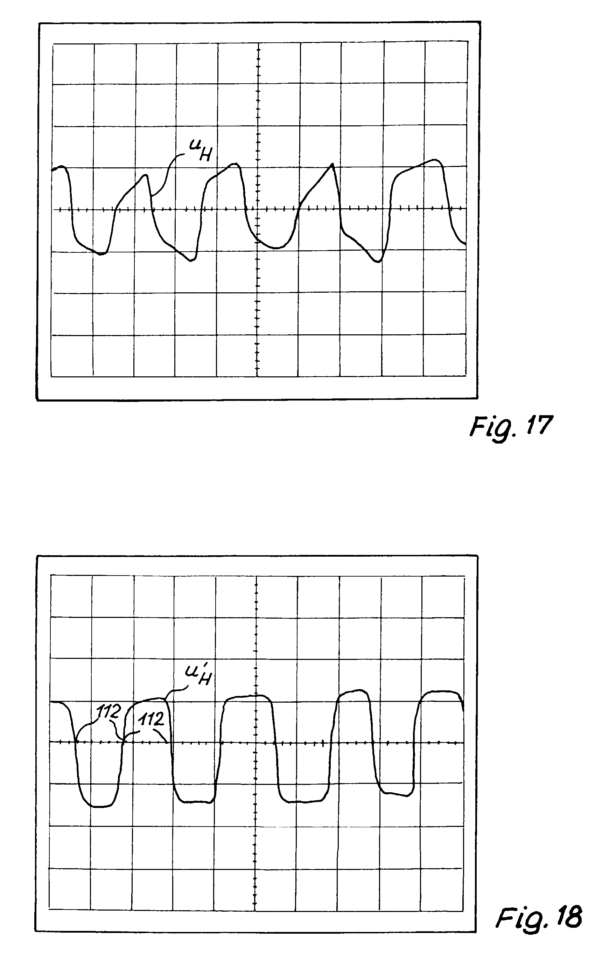

Fig. 17 zeigt das Signal u_{H} eines Hallgenerators 14 ohne das Fenster 76, 76', und Fig. 18 zeigt dasselbe Signal u'_{H} bei Verwendung des Fensters 76, 76'. Man erkennt, daß bei Fig. 17 die Kommutierungszeitpunkte verschoben sind, und daß das Signal dort verzerrt ist, während es bei Fig. 18 im wesentlichen eine Abbildung der Magnetisierung des Rotormagneten 66 darstellt. Dies hat auch seinen Grund darin, daß bei Fig. 17, also ohne das Fenster 76, 76', das Signal am Hallgenerator 14 so schwach wird, daß es durch die vom Stator 20 im Betrieb erzeugten magnetischen Flüsse Ø2 (Fig. 1) zusätzlich verzerrt werden kann, was man auch als Ankerrückwirkung (armature reaction) bezeichnen könnte. Dagegen wirkt bei Fig. 18, also mit Fenster 76, 76', auf den Hallgenerator 14 ein relativ großer Streufluß, und deshalb ist bei Fig. 18 ein sicherer Anlauf gewährleistet, nicht aber bei Fig. 17, und der Wirkungsgrad ist bei Fig. 18 besser.

An ihren entgegen der Drehrichtung 72 gelegenen Enden haben die Klauenpole 30, 32 schräge Kanten 30", 32", wie sie zur Erzeugung eines Reluktanzmoments erforderlich sind, vgl. dazu die DE-A1 2346380. Die Abwicklung (development) gemäß Fig. 7 zeigt den Verlauf einer solchen schrägen Kante 30".

Aus Fig. 8 und 9 geht die tatsächliche Größe des Polblechs 28 hervor. Es handelt sich hier also bevorzugt um einen Kleinstmotor, wie er zum Antrieb eines Lüfters dient, mit dem elektronische Bauteile direkt gekühlt werden, z.B. zur direkten Montage auf einem Mikroprozessor.

Die Fig. 10 bis 15 zeigen das obere Polblech 40, wobei in Fig. 10 die Drehrichtung 72 durch einen Pfeil angegeben ist. Auch hier ist die in Drehrichtung vordere Kante 42', 44' der Klauenpole 42, 44 gerade, verläuft also parallel zur Drehachse 74, und die in Drehrichtung hintere Kante 42", 44'' ist abgeschrägt, wie aus der Abwicklung der Fig. 13 besonders gut ersichtlich.

Wie man aus Fig. 1 klar entnimmt, folgt in Drehrichtung 72 jeweils auf eine gerade Kante (z.B. 30') eines Klauenpols (z.B. 30) eine schräge Kante (z.B. 44") eines darauffolgenden Klauenpols (z.B. 44), dann erneut eine gerade Kante 44', eine schräge Kante 32", etc. Man erhält so das gewünschte Reluktanzmoment bei dieser Motorbauart. Die Fig. 14 und 15 zeigen auch hier das obere Polblech 40 in natürlicher Größe.

Fig. 16 zeigt eine Schaltung zum Betrieb des Motors 10. Der Hallgenerator 14 ist hier als Hall-IC ausgebildet. Zu seiner Stromversorgung ist er mit einem Anschluß an eine Plusleitung 80 und - über einen Widerstand 82 - an eine Minusleitung 84 angeschlossen. Sein Ausgang 86 ist über einen Pullup-Widerstand 88 mit der Plusleitung 80, über einen Widerstand 90 mit der Basis eines npn-Darlington-Transistors 92, und über einen Widerstand 94 mit der Basis eines npn-Transistors 96 verbunden, der als Phasenumkehrtransistor dient. Der Emitter des Transistors 96 ist mit der Minusleitung 84 verbunden; sein Kollektor ist über einen Widerstand 98 mit der Plusleitung 80 und über einen Widerstand 100 mit der Basis eines npn-Darlingtontransistors 104 verbunden.

Die Emitter der Transistoren 92, 104 sind miteinander und - über einen gemeinsamen Emitterwiderstand 106 - mit der Minusleitung 84 verbunden. Der Kollektor des Transistors 92 ist über den Strang 22 des Motors 10 mit der Plusleitung verbunden. Ebenso ist der Kollektor des Transistors 104 über den Strang 24 des Motors 10 mit der Plusleitung verbunden. Zwischen Kollektor und Basis der Transistoren 92 und 104 liegt jeweils ein Kondensator 108 bzw. 110 (z.B. 3,3 nF), dessen Funktion es ist, die Schaltvorgänge zu verlangsamen und dadurch Funkstörungen bei der Kommutierung zu vermeiden.

Wenn das Signal am Ausgang des Hall-IC 14 hoch wird, werden die Transistoren 92 und 96 leitend gesteuert. Dadurch erhält der Strang 22 Strom, und der Transistor 104 wird gesperrt, weil seine Basis über den Transistor 96 mit der Minusleitung 84 verbunden wird.

Wird umgekehrt das Signal am Ausgang 86 des Hall-IC 14 niedrig, so werden die Transistoren 92 und 96 gesperrt. Über den Widerstand 98 erhält jetzt der Transistor 104 einen Basisstrom, der ihn leitend macht, so daß in diesem Fall der Strang 24 des Motors 10 Strom erhält.

Da die Kommutierung im wesentlichen zu den Zeitpunkten 112 (Fig. 18) erfolgt, an denen das Signal u'_{H} sein Vorzeichen ändert, erkennt man aus einem Vergleich der Fig. 17 und 18 die starke Verbesserung, die sich durch die Erfindung ergibt.

Die Magnetisierung des Rotormagneten 66 ist bevorzugt so gewählt, daß die Grenzen zwischen seinen Polen nicht oder nur wenig geschrägt sind, d.h. diese Grenzen verlaufen im wesentlichen parallel zur Drehachse 74. Hierdurch wird der - sehr kleine - Magnetring 66 eines solchen Kleinstmotors 10 am besten ausgenutzt, da jede Schrägung der Polgrenzen eine Schwächung des Rotormagneten bewirken würde.

Wesentlich erscheint, daß man bei der Erfindung die Aussparung 76, 76' so dimensioniert, daß sie ausreicht, um den "Absaugeffekt" des unteren Polblechs 28 hinsichtlich des Streufelds vom Rotormagneten 66 zu mindern, wobei aber andererseits im - vorstehend beschriebenen - magnetischen Kreis des Motors kein zusätzlicher Widerstand erzeugt und das Reluktanzmoment nicht geschwächt wird. Durch die Erfindung gelingt es, diese einander widerstrebenden Forderungen unter einen Hut zu bekommen.

## Patentansprüche

1. Elektronisch kommutierter Außenläufermotor (10), insbesondere für einen Lüfter,
mit einem permanentmagnetischen Außenrotor (66),
mit einem Innenstator (20), welcher weichferromagnetische Elemente (28, 40) nach Art von Klauenpolen aufweist,
und mit einem vom Streufeld des permanentmagnetischen Außenrotors (66) gesteuerten, im Bereich des Stators (20) angeordneten galvanomagnetischen Sensor (14),
dadurch gekennzeichnet, daß
der galvanomagnetische Sensor (14) entgegen der Drehrichtung (72) relativ zu einer neutralen Feldzone (52) des Stators (20) versetzt und in einer zugeordneten Aussparung eines der weichferromagnetischen Elemente des Stators angeordnet ist,
um die Größe des auf den galvanomagnetischen Sensor (14) vom Außenrotor (66) wirkenden Magnetflusses zu erhöhen und damit die Genauigkeit des von diesem Sensor (14) im Betrieb abgegebenen Rotorsstellungssignals zu verbessern.

2. Motor nach Anspruch 1, bei welchem auf jeder Seite einer die Drehachse (74) des Rotors (58) umschließenden Spulenanordnung (50) ein weichferromagnetisches Element (28, 40) mit einem im wesentlichen ebenen Teil (34) vorgesehen ist, von dem aus Klauenpole (30, 32, 42, 44) etwa rechtwinklig abgebogen sind,
und bei welchem die im Bereich des galvanomagnetischen Sensors (14) vorgesehene Aussparung (76, 76') im Bereich einer solchen etwa rechtwinkligen Biegestelle vorgesehen ist.

3. Motor nach Anspruch 2, bei welchem die Aussparung (76, 76') im betreffenden ebenen Teil (34) und/oder im betreffenden Klauenpol (30) vorgesehen ist.

4. Motor nach einem oder mehreren der vorhergehenden Ansprüche, bei welchem die Klauenpole jeweils eine in Drehrichtung (72) gesehen hintere, schräge Kante und eine gerade vordere Kante aufweisen, welch letztere im wesentlichen parallel zur Drehachse (74) des Motors verläuft,
wobei die im Bereich des galvanomagnetischen Sensors (14) vorgesehene Aussparung (76, 76') eine Lücke in einer solchen geraden Kante (30') eines Klauenpols (30) bildet.

5. Motor nach einem oder mehreren der vorhergehenden Ansprüche, bei welchem am weichferromagnetischen Element (28) zusätzlich zu der im Bereich des galvanomagnetischen Sensors (14) vorgesehenen Aussparung (76, 76') eine hierzu bezüglich der Drehachse (74) des Motors (10) im wesentlichen symmetrisch gelegene und im wesentlichen identisch ausgebildete Aussparung (78, 78') vorgesehen ist.

## Claims

1. Electronically commutated exterior rotor motor (10), in particular for a fan, with a permanent magnet exterior rotor (66), with an interior stator (20) which exhibits soft ferromagnetic elements (28, 40) like claw poles, and with a galvanomagnetic sensor (14) controlled by the leakage field of the permanent magnet exterior rotor (66) and arranged in the area of the stator (20),
characterised in that the galvanomagnetic sensor (14) is offset relative to a neutral field zone (52) of the stator (20) in the opposite direction to the direction of rotation (72) and disposed in an associated recess of one of the soft ferromagnetic elements of the stator in order to increase the magnitude of the magnetic flux acting on the galvanomagnetic sensor (14) from the exterior rotor (66) and hence improve the accuracy of the rotor position signal emitted by this sensor (14) when in operation.

2. Motor according to claim 1, in which on each side of a coil arrangement (50) surrounding the rotational axis (74) of the rotor (58) a soft ferromagnetic element (28, 40) with an essentially flat part (34) is provided from which claw poles (30, 32, 42, 44) are bent roughly at right angles and in which the recess (76, 76') provided in the area of the galvanomagnetic sensor (14) is provided in the area of such a roughly right angled bending location.

3. Motor according to claim 2, in which the recess (76, 76') is provided in the affected flat part (34) and/or in the affected claw pole (30).

4. Motor according to one or more of the preceding claims, in which the claw poles in each case exhibit an oblique edge at the rear viewed in the direction of rotation (72) and a straight front edge which runs essentially parallel to the axis of rotation (74) of the motor, the recess (76, 76') provided in the area of the galvanomagnetic sensor (14) forming a gap in such a straight edge (30') of a claw pole (30).

5. Motor according to one or more of the preceding claims, in which in addition to the recess (76, 76') provided in the area of the galvanomagnetic sensor (14) a recess (78, 78') located essentially symmetrical thereto with respect to the axis of rotation (74) of the motor (10) and essentially of identical design is provided in the soft ferromagnetic element (28).

## Revendications

1. Moteur à rotor extérieur commuté électroniquement (10), en particulier pour un ventilateur, avec un rotor extérieur à aimant permanent (66), avec un stator intérieur (20), lequel comporte des éléments ferromagnétiques doux (28, 40) à la façon de pôles à griffes, et avec un détecteur galvanomagnétique (14) placé dans la zone du stator (20) et commandé par le champ de dispersion du rotor extérieur à aimant permanent (66), caractérisé en ce que le détecteur galvanomagnétique (14) est disposé inversement au sens de rotation (72) de façon décalée par rapport à une zone de champ neutre (52) du stator (20) et dans un évidement associé de l'un des éléments ferromagnétiques doux du stator, afin d'accroître l'ampleur du flux magnétique agissant sur le détecteur galvanomagnétique (14) du rotor extérieur (66) et ainsi améliorer la précision du signal de position du rotor délivré en cours de fonctionnement par ce détecteur (14).

2. Moteur selon la revendication 1, dans lequel, de chaque côté d'un groupement de bobines (50) entourant l'axe de rotation (74) du rotor (58), un élément ferromagnétique doux (28, 40) avec une partie essentiellement plate (34) est prévu, depuis lequel des pôles à griffes (30, 32, 42, 44) sont pliés à peu près à angle droit, et dans lequel l'évidement (76, 76') prévu dans la zone du détecteur galvanomagnétique (14) est prévu dans la zone d'un tel point de pliage à peu près à angle droit.

3. Moteur selon la revendication 2, dans lequel l'évidement (76, 76') est prévu dans la partie plate concernée (34) et/ou dans le pôle à griffes concerné (30).

4. Moteur selon une ou plusieurs des revendications précédentes, dans lequel les pôles à griffes chaque fois présentent lorsqu'on considère le sens de rotation (72) un bord arrière en biais et un bord avant droit, ce dernier s'étendant essentiellement parallèlement à l'axe de rotation (74) du moteur, l'évidement (76, 76') prévu dans la zone du détecteur galvanomagnétique (14) formant ce faisant un interstice dans un tel bord droit (30') d'un pôle à griffes (30).

5. Moteur selon une ou plusieurs des revendications précédentes, dans lequel il est prévu dans l'élément ferromagnétique doux (28), outre l'évidement (76, 76') prévu dans la zone du détecteur galvanomagnétique (14), un évidement (78, 78') disposé à cet égard essentiellement symétriquement à l'axe de rotation (74) du moteur (10) et essentiellement identique.
